# EUROPÄISCHE PATENTSCHRIFT

(11) **EP 1 035 683 B1**
(45) Veröffentlichungstag und Bekanntmachung des Hinweises auf die Patenterteilung: **27.07.2005**
(21) Anmeldenummer: 00102897.6
(22) Anmeldetag: 12.02.2000
(51) Int. Cl.: H04L 9/06

(54) **Verfahren zur Erhöhung der Datensicherheit von Implementierungen kryptographischer Algorithmen**
Process for increasing data security of cryptosystems implementations
Procédé visant à renforcer la sécurité des données d'implémentations d'algorithmes cryptographiques

(30) Priorität: 09.03.1999 DE 19910184
(43) Veröffentlichungstag der Anmeldung: 13.09.2000
(73) Patentinhaber: Deutsche Telekom AG, 53113 Bonn (DE)
(72) Erfinder: Schaffelhofer, Ralf, 64285 Darmstadt (DE); Saar, Eva, 64293 Darmstadt (DE)

(56) Entgegenhaltungen:
- EP-A- 0 981 223

## Beschreibung

Die Erfindung betrifft ein Verfahren zur Erhöhung der Datensicherheit von Implementierungen kryptographischer Algorithmen, vorzugsweise von Implementierungen des DES-Algorithmus oder von Varianten des DES-Algorithmus. Das dargestellte Verfahren dient insbesondere der Erhöhung der Sicherheit eines eine Zentralverarbeitungseinheit (CPU) sowie einen Speicher umfassenden und unter Implementierung des Algorithmus realisierten, Informationen beherbergenden Systems gegenüber einem Angriff, bei dem in der Art einer Differential Power Analysis (DPA) die Ermittlung bei der Durchführung des Algorithmus verwendeter Schlüssel unter Einbeziehung der infolge des Datentransports zwischen der Zentralverarbeitungseinheit CPU und dem Speicher auftretenden unterschiedlichen Werte für den Stromverbrauch des Systems erfolgt.
Im Zuge der Entwicklung zur Informationsgesellschaft wachsen die Bestände elektronisch gespeicherter Informationen ständig an. Damit verbunden ist außerdem ein immenser Anstieg des Austausches sensibler Informationen in Form digitaler Datenströme. Dem Schutz der Daten, insbesondere ihrer Vertraulichkeit, Authentizität und Integrität, kommt daher eine überragende Bedeutung zu.
So werden in Systemen, welche sich im alltäglichen Einsatz befinden, zunehmend Daten gespeichert und verarbeitet, auf die jeweils nur dafür autorisierte Nutzer bzw. deren Systeme Zugriff in einem vorgegebenen Umfang haben dürfen. Beispielhaft hierfür sei. auf die zunehmende Bedeutung und die Verbreitung von Chipkarten verwiesen, die unter anderem im Geldverkehr oder im Zusammenhang mit öffentlichen Fernsprechern, dem Mobilfunk oder dem Pay-TV in den letzten Jahren eine weite Verbreitung gefunden haben.
Den dargestellten Sicherheitsanforderungen wird vor allem durch eine Verschlüsselung geheimzuhaltender Daten begegnet. Dabei hat die Verschlüsselung, auch wenn deren Bedeutung insbesondere im Privatsektor erst in jüngster Zeit so rasant zugenommen hat, bereits eine lange Historie. So wurde beispielsweise der auf Chipkarten häufig verwendete DES-Algorithmus bereits Mitte der siebziger Jahre entwickelt. Eine grundlegende Darstellung dieses Algorithmus findet sich unter anderem in Schneier "Angewandte Kryptrographie" Addison- Wesley Publishing Company - 1996. Obwohl der Algorithmus, wie sein verbreiteter Einsatz zeigt, bislang als vergleichsweise sicher galt, wurde stets versucht, ihn durch unterschiedliche Methoden zu brechen. Im Vordergrund standen dabei bisher kryptoanalytische Verfahren auf der Basis mathematischer und/oder rechentechnischer Methoden. Eine weitere Möglichkeit besteht darin, mit Rechnern entsprechender Leistungsfähigkeit alle in dem durch den Algorithmus festgelegten Schlüsselraum möglichen Schlüssel durchzuprobieren. Aufgrund der Größe des Schlüsselraums sind derartige Versuche jedoch selbst mit leistungsstarken Rechnern relativ aufwendig.
Neuere Versuche zum Brechen von Verschlüsselungsalgorithmen beziehen die Beobachtung bestimmter physikalischer Parameter beim Ablauf des Algorithmus in die Kryptoanalyse mit ein.
So ist beispielsweise ein als "Differential Power Analysis" (DPA) bezeichneter Angriff bekannt geworden, über welchen näheres unter der Internet-Adresse www.cryptography.com/dpa ausgeführt wird. Im Kern beruht die unter anderem auch auf den DES-Algorithmus anwendbare Analyse darauf, den. Stromverbrauch des die Verschlüsselung durchführenden Systems beim Ablauf des Algorithmus oder entsprechend dem Stromfluß sich verändernde elektrische Felder in einer großen Anzahl von Messungen innerhalb eines bestimmten Zeitintervalls zu erfassen bzw. zu detektieren, und hieraus durch eine geeignete Gewichtung vieler aufgenommener Meßkurven einen Rundenschlüssel zu ermitteln. Die Messung des Stromverbrauchs kann dabei beispielsweise bei einer Chipkarte an den die Schnittstelle zwischen der Chipkarte und einem Host darstellenden Kontakten auf der Chipkarte erfolgen. Mittels des bekannten, 48 Bit langen Rundenschlüssels gelingt es durch einfaches Durchrechnen der verbleibenden Varianten auf den vollständigen, 56 Bit langen Schlüssel zu schlußfolgern, wobei die Anzahl dieser möglichen Varianten gegebenenfalls durch die einmalige oder mehrmalige wiederholte Anwendung der DPA auf vorhergehende oder nachfolgende Runden des Algorithmus verringert werden kann. In jedem Falle heißt dies aber in der Konsequenz, daß im Hinblick auf diese Attacke, insbesondere der Art und Weise der Implementierung des Algorithmus eine besondere Bedeutung zukommt. Zur Abwehr eines Angriffs in Art der DPA wird durch die EP 0981 223 A2, veröffentlicht aus 23. 02. 2000, eine Lösung vorgeschlagen, bei welcher Datenblöcke des zu verschlüsselnden Klartextes im Zuge der Verschlüsselung mit aus einer Tabelle zufällig ausgewählten Bitmustern mittels einer XOR-Funktion maskiert und der sich daraus ergebende Einfluss auf das Ergebnis der Verschlüsselung durch den geeigneten Einsatz der Komplemente der jeweiligen Bitmuster wieder eliminiert werden. Das dargestellte Verfahren ist jedoch vergleichsweise kompliziert und greift im Grunde in den Verschlüsselungsalgorithmus ein.

Aufgabe der vorliegenden Erfindung ist es, ein einfaches Verfahren anzugeben, durch welches die Datensicherheit von Implementierungen kryptographischer Algorithmen, vorzugsweise von Implementierungen des DES-Algorithmus und/oder seiner Varianten im Hinblick auf einen nach der Art der Differential Power Analysis ausgeführten Angriff, erhöht wird.

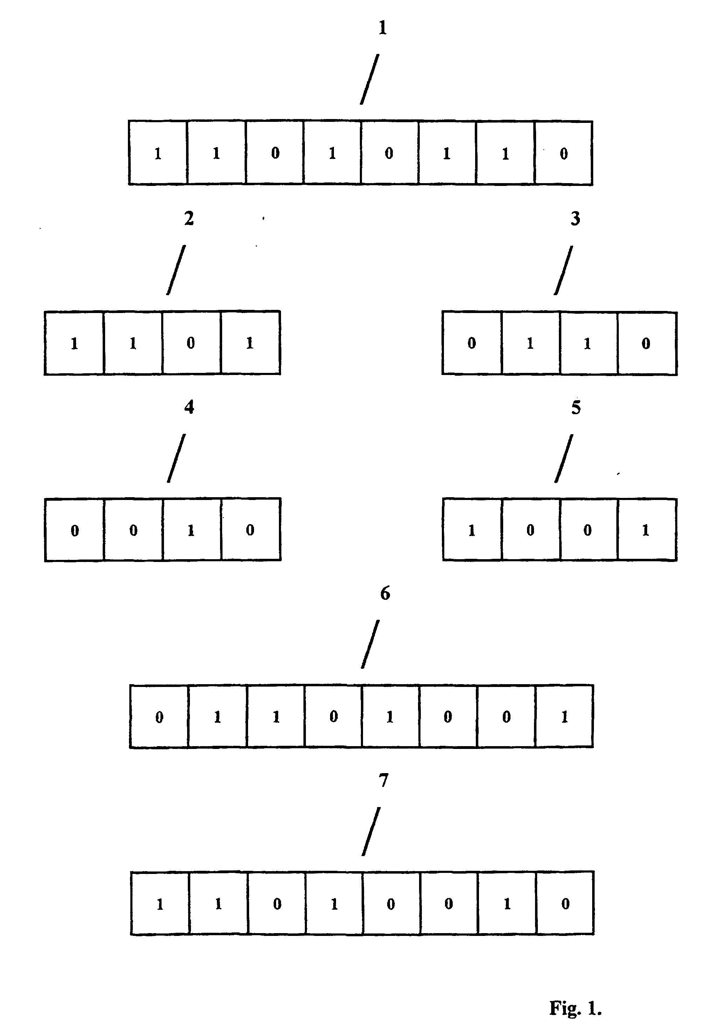

Erfindungsgemäß wird die Aufgabe durch ein Verfahren mit den Merkmalen des Hauptanspruchs gelöst. Mögliche Ausgestaltungen des Verfahrens sind durch die Unteransprüche gegeben. Das erfindungsgemäße Verfahren geht dabei davon aus, daß unabhängig davon, ob die Implementierung des Algorithmus hard- oder softwaremäßig erfolgt, bei der Durchführung des Algorithmus jeweils ein Datenaustausch zwischen einem Prozessor (CPU) und zugeordneten Speichern über einen Datenbus stattfindet und gerade der Transport von Datenblöcken über diesen Datenbus Ansatzpunkte für die beschriebene Attacke, insbesondere Möglichkeiten zur Erfassung von Veränderungen des sich beim Datentransport einstellenden Stromverbrauchs bietet. Unter dieser Annahme löst die Erfindung die gestellte Aufgabe dadurch, daß das den augenblicklichen Stromverbrauch des Systems unmittelbar beeinflussende Hamminggewicht der jeweils über den Datenbus zwischen der CPU und dem Speicher zu übertragenden Datenblöcke zumindest vor der Übertragung in einer der Übertragungsrichtungen - von der CPU zum Speicher oder vom Speicher zur CPU - in eindeutig umkehrbarer Weise modifiziert wird. Dazu werden die die Datenblöcke vor ihrer Übertragung in mehrere Teilblöcke gleicher Größe aufgeteilt, diese Teilblöcke jeweils um ihr Komplement ergänzt und die daraus resultierenden neuen Datenblöcke nacheinander über den Datenbus übertragen, wobei nach dem Empfang der Datenblöcke durch die CPU eine Umkehr der zuvor vorgenommenen Modifizierung und die Wiederherstellung ihrer ursprünglichen Bitfolge erfolgt. Durch die vorgeschlagene Maßnahme besitzen zwischen der CPU und dem Speicher übertragene Datenblöcke stets das gleiche Hamminggewicht, so daß es nicht mehr möglich ist, über eine wiederholte Messung des Stromverbrauchs bei der Abarbeitung des Algorithmus auf einen verwendeten Rundenschlüssel zu schlussfolgern.
Zur Lösung der Aufgabe genügt es im Grunde, wenn nur von der CPU zum Speicher übertragene Datenblöcke hinsichtlich ihres Hamminggewichts modifiziert werden und diese Datenblöcke in ihrer erfindungsgemäß veränderten Form, respektive Bitfolge, im Speicher zwischengespeichert werden. Bei einer solchen, nur beim Transport der Daten von der CPU zum Speicher erfolgenden Modifizierung des Hamminggewichts der Daten erhöht sich zwar der Speicherplatzbedarf, andererseits kann aber auf eine die entsprechende Modifizierung und deren Umkehr ermöglichende Logik im Bereich des Speichers verzichtet werden. Dabei ist es zweckmäßig, wenn die beim ersten Lesevorgang von der CPU aus dem Speicher ausgelesenen Daten dort bereits in der modifizierten Form hinterlegt sind.
Zumindest beim Empfang der hinsichtlich ihres Hamminggewichts veränderten Datenblöcke durch die CPU erfolgt aber vorzugsweise eine Umkehr der vorgenommenen Modifizierung und eine Wiederherstellung der ursprünglichen Bitfolge eines übertragenen Datenblocks. Es ist aber auch denkbar, den Algorithmus unmittelbar auf die solchermaßen veränderten Datenblöcke anzuwenden.
Gemäß einer besonders vorteilhaften, weil einfachen, Ausgestaltung des erfindungsgemäßen Verfahrens wird die Modifizierung so gewählt, daß die Datenblöcke bei der Übertragung ein Hamminggewicht aufweisen, welches der halben Datenbusbreite entspricht. Byteweise übertragene Datenblöcke haben entsprechend während ihrer Übertragung ein Hamminggewicht von 4.
Soweit dabei die durch die Modifizierung entstandenen neuen Datenblöcke eine gegenüber der Datenbusbreite geringere Länge aufweisen, werden sie gemäß dieser Vorgehensweise an definierter Stelle um die erforderliche Anzahl von Bits ergänzt werden. Bei einer auf einem Datenbus der Breite eines Bytes basierenden Implementierung ist eine besonders vorteilhafte, weil einfache, Möglichkeit darin zu sehen, daß die byteweise zu übertragenden Datenblöcke vor der Übertragung in zwei jeweils einem Halbbyte entsprechende Nibbles zerlegt Und beide Halbbytes nacheinander, jeweils durch ihr Komplement wieder zu einem Byte ergänzt, übertragen werden. Hierbei ist es dem Fachmann klar, daß die in dieser Weise modifizierten und übertragenen Bytes jeweils ein Hamminggewicht von 4 besitzen.
Durch die gemäß dem erfindungsgemäßen Verfahren vorgeschlagene Manipulierung der jeweils zu Übertragung anstehenden Datenblöcke wird erkennbar gewährleistet, daß der bei der Übertragung gegebenenfalls erfaßte Stromverbrauch des Systems nicht mehr mit dem eigentlichen Informationsinhalt der übertragenen Datenblöcke korreliert. Es ist einsehbar, daß es einem Angreifer auf diese Weise erschwert bzw. im Grunde unmöglich gemacht wird, durch die zeitliche Erfassung des Stromverbrauchs unter Einsatz statistischer Methoden auf Zwischenwerte, beispielsweise auf einen Rundenschlüssel einer Verschlüsselung nach dem DES-Algorithmus oder auch dem Triple-DES-Algorithmus, zu schlußfolgern. Selbstverständlich wird die Analyse auf der Basis der Stromwerterfassung besonders erschwert, wenn alle übertragenen Datenblöcke jeweils das gleiche Hamminggewicht aufweisen. Besonders hervorzuheben ist, daß es sich bei dem vorgeschlagenen Verfahren um eine vergleichsweise einfache Maßnahme handelt, durch die der Aufwand zur Implementierung des entsprechenden Algorithmus in nicht nennenswerter Weise erhöht wird. Das Verfahren findet jedoch dort eine Grenze, wo gegebenenfalls die Analyse auf der Messung des sich aufgrund chipinterner Abläufe einstellenden jeweiligen Stromverbrauchs der CPU durchgeführt wird.
Das vorgeschlagene Verfahren soll nachfolgend im Sinne eines Ausführungsbeispiels anhand einer Implementierung verdeutlicht werden, bei der die Übertragung von Daten zwischen der CPU und dem Speicher gemäß einer Ausgestaltung über einen 8 Bit breiten Datenbus erfolgt. Die an den jeweils zu übertragenden Datenblöcken vorzunehmende Modifizierung wird durch die Darstellung in der Fig. 1 verdeutlicht.
Es sei angenommen, daß ein 8 Bit langer Datenblock 1, welcher Informationen enthält, die es ermöglichen, auf einen beim Ablauf des DES-Verfahrens in einer beliebigen Runde gültigen Schlüssel zu schlußfolgern, über den Datenbus übertragen wird.
Gemäß der vorgeschlagenen Ausführungsform des Verfahrens wird der Datenblock 1, wie ersichtlich, in zwei jeweils einem Halbbyte entsprechende Nibbles 2, 3 geteilt. Für jedes dieser Nibbles 2, 3 wird das Komplement 4, 5 gebildet. Anschließend wird jedes der Nibbles 2, 3 durch die Ergänzung mit seinem Komplement 4 bzw. 5 wieder in einen 8 Bit langen Datenblock 6, 7 überführt. Zwangsläufig entstehen in Folge der Komplementbildung Datenblöcke 6, 7, deren Hamminggewicht immer 4 beträgt. Der solchermaßen modifizierte Datenblock 1 wird nun in Form der Datenblöcke 6, 7 beispielsweise von der CPU zum Speicher über den Datenbus übertragen. Jeder den Datenblöcken 6, 7 folgende Datenblock besitzt aufgrund der jeweils analogen Vorgehensweise ebenfalls ein Hamminggewicht von 4. Unabhängig davon welche ursprüngliche Bitfolge den so übertragenen Datenblöcken zugrunde lag, wird der Stromverbrauch während der Übertragung über den Datenbus annähernd konstant bleiben. Das jeweils übertragene, um das Komplement 4, 5 ergänzte Nibble 2, 3 liefert somit keinerlei Information über den Informationsgehalt des ursprünglich 8 Bit langen Datenblocks 1. Die am Speicher eintreffenden modifizierten Datenblöcke können dort durch Umkehrung der geschilderten Vorgehensweise vor dem eigentlichen Speichervorgang wieder in ihre ursprüngliche Bitfolge überführt oder aber in der modifizierten Form abgespeichert werden, wobei aber im letztgenannten Fall beim Transport vom Speicher zur CPU im Zuge des erneuten Einlesens der Daten zur Weiterverarbeitung eine erneute Modifizierung der Datenblöcke unterbleibt und nach dem Eintreffen der Daten in der CPU eine Umkehr der vorgenommenen Manipulation erfolgt. In der CPU wird dazu lediglich das Komplement 4 wieder abgetrennt und verworfen. Anschließend wird das dabei verbleibende Halbbyte 2 durch das in gleicher Weise behandelte nachfolgende eintreffende Halbbyte 3 ergänzt.
Ob das Verfahren bei jedem Transport der Daten über den Bus unabhängig von der Transportrichtung angewandt wird, hängt letztlich von der Auslegung und der Größe des Speichers ab. Sofern die Daten im Speicher in ihrer modifizierten Form zwischengespeichert werden, erhöht sich verständlicherweise der Speicherplatzbedarf
Dies kann aber in einigen Fällen in Hinblick darauf, daß dafür andernfalls im Bereich des Speichers eine die Modifizierung zu übertragender Datenblöcke bzw. deren Umkehr realisierende Logik vorzusehen ist, möglicherweise hingenommen werden.

## Patentansprüche

1. Verfahren zur Erhöhung der Datensicherheit von Implementierungen kryptographischer Algorithmen, vorzugsweise von Implementierungen des DES-Algorithmus oder von Varianten des DES-Algorithmus, durch welches die Sicherheit eines eine Zentralverarbeitungseinheit (CPU) sowie einen Speicher umfassenden und unter Implementierung des Algorithmus realisierten, Informationen beherbergenden Systems gegenüber einem Angriff erhöht wird, bei dem in der Art einer Differential Power Analysis (DPA) die Ermittlung bei der Durchführung des Algorithmus verwendeter Schlüssel unter Einbeziehung der sich während der Durchführung des Algorithmus oder seiner Umkehr durch den Transport von Datenblöcken zwischen der CPU und dem Speicher ergebenden unterschiedlichen Stromverbrauchswerte des Systems erfolgt, **dadurch gekennzeichnet, daß** das den Stromverbrauch des Systems unmittelbar beeinflussende Hamminggewicht der jeweils über einen Datenbus zwischen der CPU und dem Speicher zu übertragenden Datenblöcke zumindest vor der Übertragung in einer der Übertragungseinrichtungen - von der CPU zum Speicher oder vom Speicher zur CPU - in eindeutig umkehrbarer Weise modifiziert wird, indem die Datenblöcke vor ihrer Übertragung in mehrere Teilblöcke gleicher Größe aufgeteilt, diese Teilblöcke jeweils um ihr Komplement ergänzt und die daraus resultierenden neuen Datenblöcke nacheinander über den Datenbus übertragen werden, wobei alle in dieser Weise modifizierten Datenblöcke das gleiche Hanuninggewicht besitzen.

2. Verfahren nach Anspruch 1, **dadurch gekennzeichnet, daß** nur von der CPU zum Speicher übertragene Datenblöcke hinsichtlich ihres Hamminggewichts modifiziert werden, wobei diese Datenblöcke in der modifizierten Form im Speicher zwischengespeichert werden.

3. Verfahren nach Anspruch 1 oder 2, **dadurch gekennzeichnet, daß** nach dem Empfang hinsichtlich ihres Hamminggewichts modifizierter Datenblöcke durch die CPU eine Umkehr der vorgenommenen Modifizierung und eine Wiederherstellung der ursprünglichen Bitfolge der Datenblöcke erfolgt.

4. Verfahren nach einem der Ansprüche 1 bis 3, **dadurch gekennzeichnet, daß** alle modifizierten Datenblöcke während ihrer Übertragung ein Hamminggewicht aufweisen, welches der halben Datenbusbreite entspricht, wobei das Hamminggewicht byteweise übertragener Datenblöcke 4 beträgt.

5. Verfahren nach Anspruch 4, **dadurch gekennzeichnet, dass** Datenblöcke, welche eine gegenüber der Datenbusbreite geringere Länge aufweisen, an definierter Stelle um die erforderliche Anzahl von Bits ergänzt werden.

6. Verfahren nach einem der Ansprüche 1 bis 4, **dadurch gekennzeichnet, daß** byteweise über den Datenbus zu übertragende Daten vor der Übertragung in zwei jeweils einem Halbbyte entsprechende Nibbles zerlegt und beide Halbbytes nacheinander, jeweils durch ihr Komplement wieder zu einem Byte ergänzt, übertragen werden.

## Claims

1. Method for improving the data security of implementations of cryptographic algorithms, preferably of implementations of the DES algorithm or of variants of the DES algorithm, by which method the security of an information-holding system comprising a central processing unit (CPU) and a memory, the design of which system implements the algorithm, is increased against an attack in which the key used to execute the algorithm is determined in the manner of differential power analysis (DPA) using the differing current consumption values of the system that arise due to the transport of data blocks between the CPU and the memory during execution of the algorithm or its inverse, **characterized in that** the Hamming weight of the respective data blocks to be transmitted over a data bus between the CPU and the memory, which Hamming weight directly affects the power consumption of the system, is modified in a uniquely reversible manner, at least before transmission in one of the transmission devices - from the CPU to the memory, or from the memory to the CPU - **in that** the data blocks are divided before their transmission into multiple sub-blocks of equal size, said sub-blocks are each padded with their complement, and the resultant new data blocks are transmitted over the data bus sequentially, with all data blocks modified in this way possessing the same Hamming weight.

2. Method according to claim 1, **characterized in that** only data blocks transmitted from the CPU to the memory are modified with respect to their Hamming weights, these data blocks being buffered in the memory in the modified form.

3. Method according to claim 1 or 2, **characterized in that**, after the CPU receives the data blocks modified with respect to their Hamming weights, a reversal of the modification and restoration of the original bit sequence of the data blocks is performed.

4. Method according to one of claims 1 through 3, **characterized in that** all modified data blocks have a Hamming weight during their transmission that corresponds to half the data bus width, with the Hamming weight of bytewise transmitted data blocks being 4.

5. Method according to claim 4, **characterized in that** data blocks having a shorter length than the data bus width are padded at a defined location with the necessary number of bits.

6. Method according to one of claims 1 through 4, **characterized in that** data to be transmitted bytewise over the data bus are split before transmission into two nibbles, each corresponding to a half-byte, and the two half-bytes, each being padded by its complement to a byte, are transmitted sequentially.

## Revendications

1. Procédé servant à l'augmentation de la sécurité des données des mises en application d'algorithmes cryptographiques, de préférence des mises en application de l'algorithme DES ou des variantes de l'algorithme DES, procédé par lequel est augmentée la sécurité en cas d'attaque à un système comprenant une unité centrale de traitement (CPU) ainsi qu'une mémoire, réalisé avec la mise en application de l'algorithme et stockant des informations, attaque lors de laquelle a lieu, à la manière de la Differential Power Analysis (DPA), la détermination des clés utilisées lors de la réalisation de l'algorithme, y compris des différentes valeurs de la consommation de courant du système résultant de la réalisation de l'algorithme ou de son inversion par le transport de blocs de données entre la CPU et la mémoire, **caractérisé en ce que** le poids de Hamming des blocs de données devant être transmis entre la CPU et la mémoire par un bus de données et qui influence directement la consommation de courant du système est modifié de manière clairement réversible au moins avant la transmission par l'un des équipements de transmission - de la CPU à la mémoire ou de la mémoire à la CPU - en divisant les blocs de données en plusieurs blocs séparés de la même taille avant leur transmission, en ajoutant à ces blocs séparés à chaque fois le complément et en transmettant ces nouveaux blocs de données qui en résultent successivement par le bus de données, tous les blocs de données modifiés de cette manière possédant le même poids de Hamming.

2. Procédé selon la revendication 1, **caractérisé en ce que** seulement les blocs de données transmis de la CPU à la mémoire sont modifiés par rapport à leur poids de Hamming, ces blocs de données étant tamponnés sous la forme modifiée dans la mémoire.

3. Procédé selon la revendication 1 ou 2, **caractérisé en ce qu'**après la réception des blocs de données modifiés par rapport à leur poids de Hamming par la CPU, ont lieu une inversion de la modification effectuée et un rétablissement de la suite numérique des bits originale des blocs de données.

4. Procédé selon l'une des revendications 1 à 3, **caractérisé en ce que** lors de leur transmission tous les blocs de données modifiés présentent un poids de Hamming correspondant à la moitié de la largeur du bus de données, le poids de Hamming des blocs de données transmis par octet étant de 4.

5. Procédé selon la revendication 4, **caractérisé en ce que** des blocs de données qui représentent une longueur inférieure à la longueur de la largeur du bus de données se voient ajoutés le nombre requis d'octets à l'endroit défini.

6. Procédé selon l'une des revendications 1 à 4, **caractérisé en ce qu'**avant la transmission, les données devant être transmises par octets par le bus de données sont décomposées en deux quartets (« nibbles ») correspondant chacun à un demi-octet et les deux demi-octets étant transmis successivement sous forme d'octet recréé par leur complément.
